**Europäisches Patentamt**

**European Patent Office**

**Office européen des brevets**

(11) Veröffentlichungsnummer: **0 339 595**
**A2**

## (12) EUROPÄISCHE PATENTANMELDUNG

(21) Anmeldenummer: **89107525.1**

(22) Anmeldetag: **26.04.89**

(51) Int. Cl.4: **B23C 1/00 , B23C 5/10 , B25B 11/00**

(30) Priorität: **27.04.88 DE 3814228**

(43) Veröffentlichungstag der Anmeldung:
**02.11.89 Patentblatt 89/44**

(84) Benannte Vertragsstaaten:
**AT BE CH DE ES FR GB GR IT LI LU NL SE**

(71) Anmelder: **Koukal, Anton**
**Schumannweg 9**
**D-7325 Boll(DE)**

(72) Erfinder: **Koukal, Anton**
**Schumannweg 9**
**D-7325 Boll(DE)**

(74) Vertreter: **Lutz, Johannes Dieter, Dr.**
**Hohentwielstrasse 41**
**D-7000 Stuttgart 1(DE)**

(54) **Fräsmaschine.**

(57) Bei einer zum Konturenschneiden vorgesehenen Fräsmaschine ist die Rohmaterialplatte, aus welcher das Werkstück ausgeschnitten wird, auf in regelmä-ßiger Verteilung angeordneten Stützen gleicher Höhe innerhalb der Grundfläche eines Rahmens ab-stützbar, der, auf den Maschinentisch aufgesetzt, die vertikalen Randbegrenzungen einer Unterdruckkam-mer bildet, welche an ihrer dem Werkzeug zuge-wandten Seite mittels einer Abdeckfolie, die über die Rohmaterialplatte gelegt ist und an den Außenflä-chen der Rahmenzargen in Anlage gehalten ist, dichtend abgeschlossen ist und mittels eines Saug-gebläses auf einen Unterdruck von mindestens 0,3 bar evakuierbar ist. Als Fräswerkzeug ist ein zur Drehrichtung gegensinnig spiral-genuteter Fräser vorgesehen, der im Betrieb die Frässpäne in die Unterdruckkammer hineindrängt. Als Abdeckfolie, die als Verschleißteil mit durchschnitten wird, kann Papier oder eine billige Kunststoff-Folie benutzt wer-den.

Fig. 1

# Fräsmaschine

Die Erfindung betrifft eine Fräsmaschine für das Ausfräsen eines Werkstückes aus einer Rohmaterial-Platte, welche durch die Wirkung der zwischen einer Unterdruckkammer und dem Außenraum mittels eines Gebläses, das saugseitig an die Kammer angeschlossen ist, erzeugten Druckdifferenz in seiner für die Fräsbearbeitung geeigneten Position gehalten ist, in der es an innerhalb der Kammer angeordneten Stützen abgestützt ist.

Bei derartigen Fräsmaschinen ist es bekannt, eine Rohmaterialplatte, aus der mit einem bestimmten Verlauf der Außenkontur ein Werkstück ausgefräst werden soll, dadurch am Maschinentisch zu fixieren, daß diese Rohmaterialplatte auf dem Rand einer entweder in den Maschinentisch selbst oder in einen auf diesen aufgesetzten Block eingearbeiteten, flachen Vertiefung aufliegt, an welche die Saugseite eines Ventilators angeschlossen, welcher geeignet ist, in dieser "nach oben" durch die Rohmaterialplatte begrenzten Kammer einen für eine reibungsflüssige Fixierung der Rohmaterialplatte hinreichenden Unterdruck in der Kammer zu erzeugen, wobei in den Maschinentisch oder den genannten Block eine dem Umfang der Vertiefung folgende Nut eingearbeitet ist, in welche ein Dichtring, z.B. ein Moosgummi-Ring, eingelegt ist, auf welchen die Rohmaterialplatte aufliegt. Bei hinreichendem Unterdruck wird dann dieser Dichtring soweit zusammengedrückt, daß die Rohmaterialplatte satt an dem eben gestalteten Rand der Kammer aufliegt. Derjenige Bereich der Rohmaterialplatte, in welchem die Fräs-Bearbeitung - der Frässchnitt - erfolgt, befindet sich dabei in einem einige Millimeter betragenden vertikalen Abstand von dem die Kammer außenseitig umgebenden Bereich des Maschinentisches, damit ein genügender lichter Zwischenraum zwischen dem Maschinentisch und der Schneidkante des Fräsers vorhanden ist.

Der Windungssinn der Fräsernuten bezüglich der Schnittrichtung - der Drehrichtung des Fräsers - ist dabei so gewählt, daß die Materialspäne nach oben weggedrängt werden.

Hieraus resultierende Nachteile bekannter Fräsmaschinen, die vor allem für die Bearbeitung von Holz- oder Kunststoffplatten verwendet werden, sind zumindest die folgenden:

Es muß eine wenigstens annähernd der Kontur des Werkstückes entsprechende Form der Unterdruckkammer vorgesehen werden, damit die Bearbeitung nicht in einem "zu weit" von der Abstützung entfernten Bereich der Rohmaterialplatte erfolgen muß, da solche zu Schwingungen der Rohmaterialplatte Anlaß geben, mit der zwangsläufigen Folge, daß die Fräskontur mit hieraus resultierenden Ungenauigkeiten behaftet wäre. Von Nachteil ist weiter, daß die aus der Rotationsbewegung des Fräsers resultierenden Schnittkräfte das Werkstück gleichsam von der Unterlage weg "nach oben" ziehen und deshalb an die Dichtigkeit der Unterdruckkammer nach außen besonders hohe Anforderungen zu stellen sind. Auch das Entfernen der Frässpäne, das erforderlich ist, um zu vermeiden, daß solche Späne wieder in den Schnittbereich gelangen und die Fräskontur beeinträchtigen könnten, erfordert zusätzliche, mit erheblichem technischem Aufwand behaftete Absaug-Einrichtungen.

Aufgabe der Erfindung ist es daher, eine Fräsmaschine der eingangs genannten Art dahingehend zu verbessern, daß, unabhängig von der Form und Größe des durch Fräsen aus einer Rohmaterialplatte auszuschneidenden Werkstückes eine zuverlässige Fixierung desselben am Maschinentisch möglich ist, eine problemlose Entfernung der Frässpäne erzielt wird und insgesamt eine gute Schnittqualität gewährleistet ist.

Diese Aufgabe wird erfindungsgemäß durch die im kennzeichnenden Teil des Patentanspruchs 1 genannten Merkmale gelöst.

Hiernach ist die vertikale Begrenzung der Unterdruckkammer durch einen nach oben offenen, auf den Maschinentisch der Fräsmaschine aufsetzbaren Rahmen gebildet, innerhalb dessen lichter Querschnittsfläche das Werkstück an Stützen abstützbar ist, wobei eine hinreichend dichte Abdeckung der Unterdruckkammer dadurch erzielt wird, daß über das Werkstück und die Ränder des Rahmens hinweg eine flexible, aus Papier oder Kunststoff bestehende Folie gelegt wird, die zwar entlang der Fräsbahn mit durchschnitten wird, die aber, weil an die - großvolumige - Kammer ein Gebläse hinreichend hoher Förderleistung angeschlossen ist, die Aufrechterhaltung eines hinreichenden Unterdruckes in der Kammer nicht nennenswert beeinträchtigt, sowie dadurch, daß als Fräswerkzeug ein Fräser vorgesehen ist, bei dem die spiralförmige Spannut den zur Schnittrichtung gegensinnigen Windungssinn hat, mit der Folge, daß die Frässpäne in die Unterdruckkammer hineingedrängt werden und mit dem Abluftstrom gleichsam abgesaugt werden.

Diese Unterdruckkammer kann bei der erfindungsgemäßen Fräsmaschine durch einen Rahmen begrenzt werden, der, seinen Außenabmessungen nach stets größer ist als das herzustellende Werkstück, das, eine Abstützung in einem hinreichend geringen Rastermaß vorausgesetzt, was ohne weiteres möglich ist, in sehr gut ebener Anordnung gehalten bleibt.

Durch die Merkmale des Anspruchs 2 ist eine diesbezüglich sehr gut geeignete, einfache Gestaltung von Stützstegen angegeben, die vorzugsweise parallel zueinander verlaufen, innerhalb der Kammer angeordnet sind und, gemäß den Merkmalen des Anspruchs 3 zweckmäßigerweise geringfügig höher sind als die die Randbegrenzungen der Kammer bildenden Rahmenwände. Derartige Stützkörper können z.B. als Holzleisten ausgebildet sein, die zwar entlang der jeweiligen Schnittkontur vom Fräser auf einem Teil ihrer Höhe durchschnitten werden und demgemäß nur für eine begrenzte Zahl von Einsatzfällen nutzbar bleiben, die aber als billige Verschleißteile ohne nennenswerten Einfluß auf die Kosten der Bearbeitung sind. Wenn, wie üblicherweise vorgesehen als Unterdruckgebläse ein Radiallüfter verwendet wird, der eine Druckdifferenz von größenordnungsmäßig 400 mm Wassersäule zu erzeugen in der Lage ist, so genügt als Abdeckmaterial normales Packpapier oder eine billige Kunststoff-Folie mit einer Dicke um 20 bis 50 μm, z.B. eine Polyäthylenfolie, die sich sehr gut an die Kontur des Werkstückes bzw. der Rohmaterialplatte sowie des die Unterdruckkammer begrenzenden Rahmens anschmiegen kann.

Wenn als Abdeckmaterial ein - saugfähiges - Papiermaterial verwendet wird, so kann dieses mit einem Schmiermittel für den Fräser getränkt sein.

Durch die Merkmale des Anspruchs 6 wird die allseitig gut abdichtende Anlage der Abdeckfolie an den Rahmenwänden begünstigt.

Durch die Merkmale des Anspruchs 7 wird mittels zusätzlicher, die Bewegungen des Fräsers in einer Koordinatenrichtung mit ausführender Rollen, auf die zusätzliche Abdeckfolien aufwickelbar und von diesen abwickelbar sind, erreicht, daß jeweils nur ein schmaler Streifen der unmittelbar das Werkstück bzw. die Rohmaterialplatte abdeckenden Folie mit dem Außenraum direkt kommuniziert", so daß auch nur entsprechend kurze Abschnitte eines durch diese primäre Abdeckfolie geführten Schnittes eine kommunizierende Verbindung der Unterdruckkammer mit dem Außenraum vermitteln, was aber in Anbetracht der hinreichend hohen Förderleistung des Gebläses ohne nennenswerten Einfluß auf die Druckdifferenz zwischen der Unterdruckkammer und dem Außenraum bleibt.

Dabei versteht es sich natürlich, daß als Fräser nur solche verwendet werden, die einen kleinen Durchmesser zwischen 3 und 5 mm haben.

Die durch die Merkmale des Anspruchs 8 angegebene Gestaltung von Stützelementen, an denen - innerhalb des Rahmens - die Rohmaterialplatte abgestützt ist, hat den Vorteil, daß solche Stützelemente, einen hinreichend engen Raster derselben vorausgesetzt, so angeordnet werden können, daß entlang der Fräs-Schnittbahn derartige Stützelemente nicht angeordnet sind und mithin auch nicht einem durch Überfräsen bedingten Verschleiß ausgesetzt sind.

Weitere Einzelheiten und Merkmale der Erfindung ergeben sich aus der nachfolgenden Beschreibung eines speziellen Ausführungsbeispiels anhand der Zeichnung. Es zeigen:

Fig. 1 die erfindungswesentlichen Elemente einer erfindungsgemäßen Fräsmaschine, in teilweise abgebrochenem Schnitt längs einer die zentrale Achse des Fräsers enthaltenden Ebene, mit einer zur Fixierung des Werkstückes vorgesehenen Unterdruckkammer und

Fig. 2 die Fräsmaschine gemäß Fig. 1 in vereinfachter, schematischer Draufsicht.

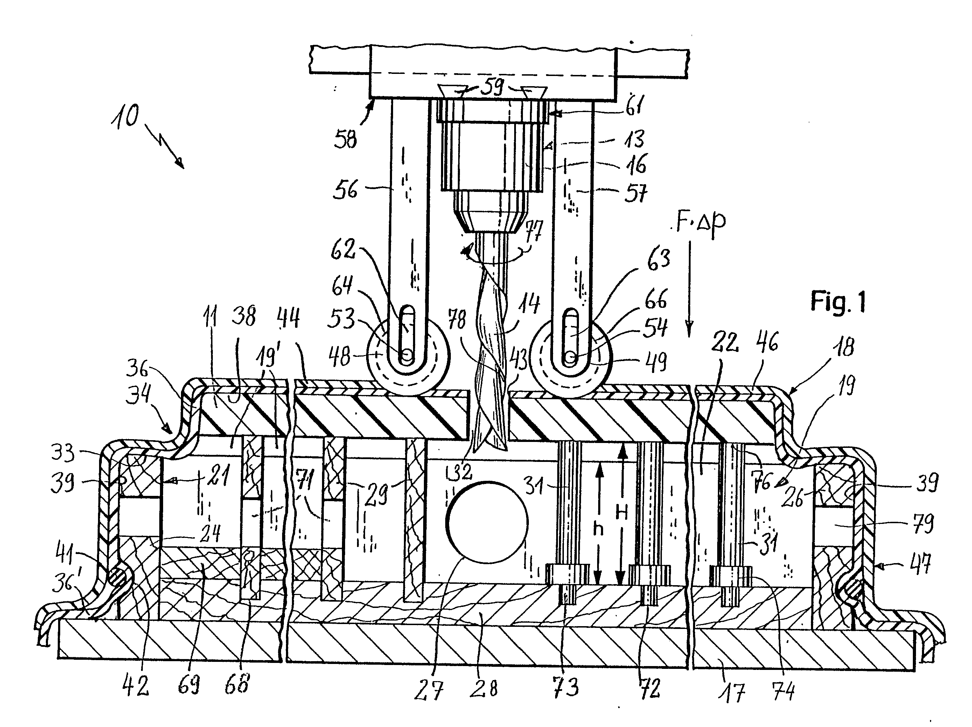

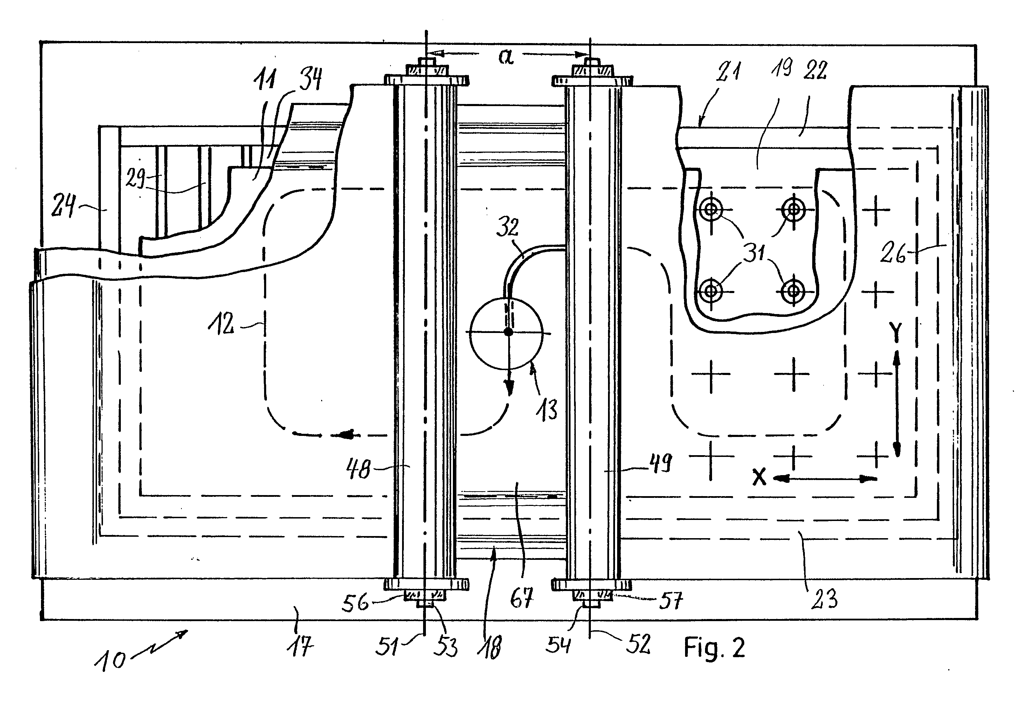

Die in der Figur 1, auf deren Einzelheiten ausdrücklich verwiesen sei, dargestellte, erfindungsgemäße, insgesamt mit 10 bezeichnete Fräsmaschine, ist insbesondere dafür ausgelegt, aus einer Rohmaterialplatte 11 ein Werkstück entlang einer vorgegebenen Kontur 12 auszufräsen, die in der Figur 2, auf deren Einzelheiten ebenfalls ausdrücklich verwiesen sei, durch eine gestrichelte Linie dargestellt ist, wobei das Werkstück im Folgenden durch seine Kontur 12 repräsentiert sein soll.

Die Fräsmaschine 10 ist in den Figuren 1 und 2, der Einfachheit der Darstellung halber, lediglich durch einen insgesamt mit 13 bezeichneten, das Fräswerkzeug 14 und dessen Antriebsmotor 16 umfassenden Fräskopf, den einen Teil des feststehenden Maschinengestells bildenden Maschinentisch 17, sowie eine insgesamt mit 18 bezeichnete Haltevorrichtung repräsentiert, mittels derer die Rohmaterialplatte 11 in der für den Fräsvorgang erforderlichen Position am Maschinentisch 17 fixierbar ist.

Für die im übrigen vorgesehene Gestaltung der Fräsmaschine 10 sei vorausgesetzt, daß der Fräskopf 13 mittels eines - nicht dargestellten - Koordinatenwagens sowohl in Längsrichtung - gemäß Figur 2 in X-Richtung - als auch in der dazu rechtwinkligen Querrichtung - gemäß Figur 2 in Y-Richtung - gesteuert hin- und herverfahrbar sei, so daß durch eine mit für sich bekannten Mitteln erfolgende Steuerung und Überlagerung der in X- und Y-Richtung erfolgenden Bewegungen des Fräskopfes 13 das Fräswerkzeug 14 entlang der vorgesehenen Schnittkontur 12 des Werkstückes insgesamt verfahrbar ist. Eine derartige Bahnsteuerung kann z.B. als CNC-Steuerung realisiert sein, welche programmgesteuert arbeitet, oder auch als sogenannte Nachlauf-Steuerung, die z.B. mit fotoelektrischer Abtastung einer Zeichnungsvorlage oder mit mechanischer Abtastung einer Schablone arbeitet.

Die Haltevorrichtung 18 umfaßt eine Unterdruckkammer 19, in der mittels eines - nicht dargestellten - als hinreichend leistungsstark vorausgesetzten Gebläses, z.B. eines Radiallüfters, dessen Saugseite an die Kammer 19 angeschlossen ist, ein Unterdruck von 0,3 bis 0,4 (300 bis 400 mm Wassersäule) erzeugbar ist. Diese Unterdruckkammer 19 ist in Längs- und Querrichtung durch einen - beim dargestellten Ausführungsbeispiel rechteckigen -insgesamt mit 21 bezeichneten Rahmen begrenzt, der auf den Maschinentisch 17 aufsetzbar und erforderlichenfalls an diesem mit gängigen Mitteln fixierbar ist.

Dieser Rahmen 21 ist beim dargestellten, speziellen Ausführungsbeispiel als Rechteck-Rahmen mit vertikal aufragenden Längszargen 22 und 23 sowie Querzargen 24 und 26 gleicher Höhe h ausgebildet, die in den Rahmenecken fest und hinreichend druckdicht miteinander verbunden, z.B. verzapft und verleimt sind. An einer seiner Zargen, gemäß der Darstellung der Figur 1 seiner "hinteren" Längszarge 22 ist der als kreisrunde Öffnung 27 dargestellte Anschlußstutzen für das Unterdruckgebläse angeordnet, mittels dessen in der außenseitig durch die Rahmenzargen 22, 23, 24 und 26 begrenzte Unterdruckkammer 19 der genannte Unterdruck erzeugbar ist.

In einfachst möglicher Gestaltung besteht der Rahmen 21 lediglich aus den Zargen 22, 23, 24 und 26, in welchem Falle die untere Begrenzung der Unterdruckkammer 19 durch den Maschinentisch 17 selbst gebildet wird.

Vorteilhaft ist es jedoch, wenn der Rahmen 21, wie dargestellt, an seiner Unterseite durch eine Bodenplatte 28 abgeschlossen ist, die ihrerseits dicht mit den Zargen 22, 23, 24 und 26 verbunden, Z.B. mit diesen verleimt ist, so daß die durch den Rahmen 21 und seine Bodenplatte 28 insoweit begrenzte Unterdruckkammer 19 jedenfalls "nach unten" dicht abgeschlossen ist.

Die Rohmaterialplatte 11 ist auf über die Grundfläche des Rahmens, die von diesem umschlossen ist, gleichmäßig verteilt angeordnete Stützen 29 bzw. 31 gleicher Höhe H auflegbar, die größer ist als die von derselben Bezugsebene aus gemessene Höhe h der Rahmenzargen 22, 23, 24 und 26. Der Betrag H - h, um den die Stützen 29 bzw. 31 höher sind als die Zargen 22, 23, 24 und 26 ist etwas (Z.B. 2 - 5 mm) größer als die Länge des freien, unteren Abschnittes des Fräswerkzeuges 14, mit dem dieses während des Fräsens "nach unten" aus der Schnittfuge 32 herausragt. Dadurch wird vermieden, daß das Fräswerkzeug 14 bei einer Fehlsteuerung den Rahmen 21, der aus Holz bestehen kann, beschädigen oder selbst beschädigt werden kann. Der Rahmen 21 ist in einer Größe ausgeführt, daß seine von den Innenflächen der Zargen 22, 23, 24 und 26 umschlossene Grundfläche größer ist als diejenige der zu bearbeitenden Rohmaterialplatte 11, die zur Vorbereitung einer Bearbeitung so auf die Stützen 29 bzw. 31 aufgelegt wird, daß zwischen den Plattenrändern und den diesen jeweils benachbarten, schmalen oberen Längsstirnflächen 33 ein die Rohmaterialplatte 11 allseitig umgebender Spalt 34 verbleibt.

Zur Vorbereitung des Bearbeitungsvorganges wird über die Rohmaterialplatte 11 und den Rahmen 21 eine z.B. als flexible Materialbahn ausgebildete Abdeckfolie 36 gelegt, die hinreichend flexibel ist, um sich an die obere Begrenzungsfläche 38 der Rohmaterialplatte 11, die oberen, schmalen Stirnflächen 33 der Rahmenzargen 22, 23, 24 und 26 und deren vertikale, äußere Begrenzungsfläche 39 und ggf. an die den Rahmen 21 umgebenden Bereiche des Maschinentisches 17 satt anschmiegen zu können, dies jedenfalls dann, wenn in der Unterdruckkammer 19 mittels des Gebläses Unterdruck erzeugt wird.

Zweck der Abdeckfolie 36 ist es hierbei, einen hinreichend dichten Abschluß der Unterdruckkammer 19 "nach oben hin" zu erzielen, damit zwischen der Unterdruckkammer 19 und dem Außenraum eine hinreichende Druckdifferenz entsteht, durch deren Wirkung die Rohmaterialplatte 11 mit großer, dem Produkt $F \cdot \Delta p$ ihrer Fläche und der Druckdifferenz $\Delta p$ entsprechender Kraft gegen die innerhalb des Rahmens 21 angeordneten Stützen 29 bzw. 31 gedrückt und dadurch reibungsschlüssig in der für die Fräs-Bearbeitung vorgesehenen Position hinreichend sicher gehalten wird.

Damit hierbei die Abdeckfolie 36 nicht durch den zwischen der Rohmaterialplatte 11 und den Rahmenzargen 22, 23, 24 und 26 verbleibenden Randspalt 34 hindurch in die Unterdruckkammer 19 hineingezogen wird, was zumindest dann zu befürchten wäre, wenn dieser Randspalt 34 eine relativ große Weite hat, kann es erforderlich werden, die Abdeckfolie 36 am Maschinentisch 17 und/oder an dem Rahmen 21 selbst zu fixieren.

Hierzu ist in der der Figur 1 entnehmbaren, speziellen Gestaltung des Rahmens 21 ein unter hinreichend kräftiger Vorspannung stehender gummielastischer Ring 41 vorgesehen, der einen äußeren Randabschnitt 36' der Abdeckfolie in einer am unteren, äußeren Basisrand des Rahmens 21 angeordneten Umfangsnut 42 kraftschlüssig fixiert hält.

Nachdem das Werkstück 11 solchermaßen für eine Bearbeitung vorbereitet ist, kann der Einstich des Fräswerkzeuges 14 durch die Abdeckfolie 36 und die Rohmaterialplatte 11 bis in die der Figur 1 entnehmbaren Arbeitsposition ausgeführt und mit dem Konturen-Frässchnitt begonnen werden.

Da im Zuge der Durchführung des Frässchnittes die Schnittfuge 32,deren lichte Weite dem Durchmesser des Fräswerkzeuges 14 entspricht, sowie der entsprechend der Schnittfuge 32 verlaufende Schlitz 43 der Abdeckfolie 36 immer "länger" werden, nimmt auch der Querschnitt des "Lecks" zu, über das die unter Atmosphärendruck stehende Außenluft in die Unterdruckkammer 19 nachströmen kann, mit der an sich unerwünschten Folge, daß die Druckdifferenz $\Delta p$ in Anlage mit den Stützen 29 bzw. 31 gehalten wird.

Diese Abnahme der Druckdifferenz kann zwar solange hingenommen werden, wie der - mit zunehmender Schnittlänge abnehmende - Strömungswiderstand für die von außen in die Unterdruckkammer 19 einströmende Luft groß ist gegen den effektiven Gesamt-Strömungswiderstand des Absaug-Strömungs pfades, im wesentlichen durch den Querschnitt des Auslaß-Stutzens 27, sowie den Querschnitt und die Länge des an diesen angeschlossenen Luftabsaug-Kanals bestimmt ist, was in praxi bedeutet, daß die Abnahme der Druckdifferenz $\Delta$ P solange - hinnehmbar - niedrig sein wird, wie die Gesamtquerschnittsfläche der durch die Schnittführung freigelegten Schnittfuge 32 klein gegen die lichte Querschnittsfläche des Auslaßstutzens 27 angeschlossenen, nicht dargestellten, Luftführungskanals bleibt, vorausgesetzt natürlich, daß die Förderleistung des zur Unterdruckerzeugung in der Unterdruckkammer 19 vorgesehenen Gebläses hinreichend hoch ist, d.h. die über die Schnittfuge 32 zuströmende Luftmenge klein gegen diejenige Luftmenge ist, die das Gebläse fördern kann.

Unter diesen Voraussetzungen sei zu einer - rohen - Abschätzung angenommen, daß der Strömungswiderstand der Luft-Förderleitung überwiegend durch deren Querschnittsfläche bestimmt sei und diese einen Wert von 50 cm² habe, was bei einem Förderleitungsrohr mit kreisrundem Querschnitt einem Durchmesser von etwa 8 cm entspricht.

Des weiteren sei angenommen, daß die Druckdifferenz zwischen Unterdruckkammer 19 und dem Außenraum auf etwa die Hälfte ihres Maximalbetrages, der mit 0,3 bar angenommen sei, abfallen darf, ohne daß hierdurch die sichere Fixierung der Rohmaterialplatte 11 gefährdet wird.

Unter diesen Voraussetzungen darf dann die durch den Schnitt freigegebene Querschnittsfläche auf einen Wert von 2500 mm² anwachsen, was bei einer Weite der Schnittfuge 32 von 1 mm einer Schnitt- bzw. Konturenlänge des auszufräsenden Werkstückes von 2,5 m entspricht.

Diese Abschätzung ergibt für den Fall, daß ein Werkstück 12 mit rechteckiger Kontur ausgefräst werden soll, das Kantenlängen von 0,8 und 0,45 m hat, wenn die Schnittkontur vollständig umlaufen ist, wobei hiernach die Druckdifferenz auf 0,15 bar abgefallen sein wird, immer noch mit einer Kraft von 5400 N an die Stützflächen der Stützen 29 bzw. 31 angedrückt wird, was bei weitem ausreichend ist, um ein Werkstück der genannten Größe sicher in seiner für die Bearbeitung erforderlichen Position zu halten.

Gleichwohl ist es vorteilhaft, wenn die Fräsmaschine 10 mit einer Einrichtung versehen ist, die im Ergebnis eine Begrenzung des freien lichten Querschnittes des Frässchnittes 12 dahingehend vermittelt, daß die Querschnittsfläche der Schnittfuge 12, über die Luft von außen in die Unterdruckkammer 19 überströmen kann, auf einen Wert begrenzt wird, der zu einem Strömungswiderstand für diese zuströmende Luft führt, der deutlich größer ist als der Strömungswiderstand des Luft-Förderkanals, über den Luft aus der Unterdruckkammer 19 "abgesaugt" wird.

Zu diesem Zweck sind zwei Bahnen 44 und 46 einer weiteren Abdeckfolie 47, mit der die Rohmaterialplatte - oberhalb der ersten Abdeckfolie 36 - auf ihrer gesamten, in Y-Richtung gemessenen Breite abdeckbar ist. Diese beiden Abdeckfolien-Bahnen 44 und 46 sind auf Walzen 48 und 49 auf- und von diesen wieder abwickelbar, die sich an der Oberseite der ersten Abdeckfolie abwälzen. Diese Walzen 48 und 49 sind mit parallelem, horizontalem Verlauf ihrer zentralen Achsen 51 und 52 bzw. ihrer Lagerwellen 53 und 54 an insgesamt U-förmigen Bügeln 56 bzw. 57, welche die in Längs-Richtung erfolgenden Steuerbewegungen des Maschinenkopfes 13 mit ausführen und an dem lediglich schematisch angedeuteten Längswagen 58 des Koordinatenwagens der Bahn-Bewegungs-Steuereinrichtung des Fräskopfes 13 befestigt sind, der seinerseits, wie durch Querführungen 59 angedeutet, an einem am Längswagen 58 des Koordinatenwagens in Y-Richtung gesteuert hin- und hervervfahrbaren, ebenfalls nur schematisch angedeuteten Querwagen 61 des Koordinatenwagens 58, 61, montiert ist. Die beiden Walzen 48 und 49 sind an den beiden Bügeln 56 und 57 auf- und ab-verschiebbar gelagert, was in der Figur 1 schematisch durch sich in vertikaler Richtung erstreckende Langlöcher 62 und 63 der Lagerbügel 56 und 57 angedeutet ist, innerhalb derer die Walzen 48 und 49 mit ihren Lagerwellen 53 und 54 frei drehbar gelagert sind. Die Walzen 48 und 49 können dadurch vertikale Ausgleichsbewegungen zur Anpassung ihrer Lage an die jeweilige Dicke des Folien-Wickels 64 bzw. 66 ausführen.

Der in X-Richtung gemessene, seitliche Abstand a der zentralen Längsachsen 51 und 52 der beiden Walzen 48 und 49, die beidseits des Fräskopfes 13 angeordnet sind, wird zweckmäßigerweise möglichst klein gewählt, um die mittels der beiden auf- und abwickelbaren Folien-Bahnen 44 und 46 nicht abdeckbare Freifläche 67, die sich in Y-Richtung über die Breite der Rohmaterialplatte 11 erstreckt und in X-Richtung eine dem Abstand a der zentralen Achsen 51 und 52 der Walzen 48 und 49 entsprechende, deutlich geringere Ausdehnung hat, dem Betrage nach möglichst klein zu halten, was in praxi bedeutet, daß die Breite a der Freifläche 67, innerhalb derer nur noch - durch die Schnittfuge 32 Luft von außen in die Unterdruckkammer 19 überströmen kann, um 10 cm beträgt. Da nur innerhalb dieser - gleichsam über das Werkstück 12 hinwegwandernden Freifläche 67 liegende Bereich der Schnittfuge 32 zu dem lichten Querschnitt beitragen können, über den Luft von außen in die Unterdruckkammer 19 strömen kann, bedeutet dies, verglichen mit der zuvor angestellten Abschätzung, daß der maximale Betrag dieses Öffnungsquerschnittes durch eine Schnittlänge von 45 + 2 x 10 cm, d.h. durch eine Schnittfugenlänge von 65 cm beschränkt wäre, was nur noch etwa 1/4 desjenigen Überström-Querschnittes entspräche, der beim Vergleichsbeispiel als maximaler Überströmquerschnitt hinzunehmen wäre.

Da die zusätzlichen Abdeckfolien 44 und 46 - im Unterschied zu der unmittelbar auf der Rohmaterialplatte 11 aufliegenden Abdeckfolie 36 praktisch keinem Verschleiß ausgesetzt sind, kann für diese zusätzlichen Abdeckfolien 44 und 46 ein hochwertiges Kunststoffmaterial oder flächig kunststoffbeschichtetes Textil- oder Glasfaser-Material verwendet werden, das sowohl eine gute Flexibilität als auch eine relativ hohe mechanische Festigkeit hat und den im Bereich der abgedeckten Schnittfugen-Abschnitte auftretenden Kräften ohne weiteres Stand halten kann.

Als Stützen 29 sind z.B. Holzlatten geeignet, die Z.B. in Nuten der Bodenplatte 28 des die Unterdruckkammer 19 mechanisch stabil begrenzenden Rahmens 21 einsteckbar sind und/oder durch Distanzstücke 69 in ihrer Soll-Lage innerhalb der Unterdruckkammer 19 fixierbar sind.

Soweit sich solche plattenförmigen Stützen 29, wie in der Figur 2 dargestellt, in Y-Richtung über die gesamte Breite der Unterdruckkammer 19 erstrecken, ist es notwendig, daß an den lattenförmigen Stützen 29 Ausnehmungen 71 vorgesehen werden, die zweckmäßigerweise am unteren Randbereich der lattenförmigen Stützen 29 angeordnet sind und die kommunizierende Verbindung der durch solche lattenförmigen Stützen gegeneinander abgegrenzten Kammerbereiche vermitteln, damit in sämtlichen Teilkammern 19′ im wesentlichen derselbe Unterdruck erzielbar ist.

Da derartige lattenförmige Stützen 29 im Verlauf des Umfräsens des Werkstückes 12 in ihrem oberen Randbereich ggf. mehrfach überfräst werden, sind sie natürlich einem Verschleiß ausgesetzt und müssen von Zeit zu Zeit ersetzt werden, was allerdings in Anbetracht der geringen Kosten für solche einfach gestalteten Stützen 29 hingenommen werden kann, jedenfalls dann, wenn große Stückzahlen von Werkstücken gleicher Form gefräst werden.

Ein derartiger Verschleiß kann vermieden werden, wenn, wie im rechten Teil der Figur 2 dargestellt, säulenförmige Stützen 31 verwendet werden, für die am Boden 28 des Rahmens 21, ggf. auch am Maschinentisch 17 selbst, in einem regelmäßigen Raster Einsteckbohrungen 72 vorgesehen sind, in welche die säulenförmigen Stützen 31 mit einem Zentrierzapfen 73 einführbar sind. Dabei ist es vorteilhaft, wenn solche säulenförmigen Stützen mit einem Standflansch 74 versehen sind, durch dessen Abstand vom oberen Stützenende die effektive Höhe H der Stützen 31 fest vorgegeben ist. Derartige Stützen 31 können dann immer so angeordnet werden, daß sie nicht auf der Fräs kontur 12 liegen. Erforderlichenfalls können in den Boden 28 des Rahmens 21 zusätzliche Einsteckbohrungen 72 eingebracht werden, die eine derartige Anordnung der Stützen 31 ermöglichen, falls das Rastermaß eine "kollisionsfreie" Anordnung der Stützen 31 nicht ermöglichen würde.

Als Fräswerkzeug 14 ist bei der Fräsmaschine 10 ein Fräser vorgesehen, der einen zu seiner Dreh- bzw. Schnittrichtung, die in der Figur 1 durch den Pfeil 77 angedeutet ist, gegensinnige Windung seiner Spiralnut 78 hat, d.h. die Frässpäne "nach unten" - in die Unterdruckkammer 19 hinein - drückt, d.h. in diejenige Richtung, die auch durch den von außen in die Unterdruckkammer 19 strömenden Luftstrom begünstigt wird. Dadurch wird nicht nur der Abtransport der Frässpäne begünstigt, sondern auch vom Spanflug "oberhalb" des Arbeitsbereiches vermieden und eine gute Schnittqualität an der die Sichtseite des Werkstückes bildenden Oberseite desselben erzielt.

Um eine möglichst satte, gut dichtende Anlage insbesondere der Abdeckfolie 36 an den äußeren, vertikalen Begrenzungsflächen 39 des Rahmens 21 zu erzielen, sind die Rahmenzargen 22, 23, 24 und 26 mit in regelmäßiger Anordnung über die Zargenflächen verteilt angeordneten Querbohrungen 79 versehen, so daß die zwischen dem Außenraum und der Unterdruckkammer 19 herrschende Druckdifferenz auch, wenigstens bereichsweise, zum Anpressen der Abdeckfolie 36 an die Längs- und Querzargen des Rahmens 21 sowie zum Anpressen der beiden zusätzlichen Abdeckfolien 44 und 46 an die Querzargen 24 und 26 des Rahmens ausgenutzt werden kann. Als Abdeckfolie 36 eignet sich Z.B. eine 20 μm bis 50 μm dicke PE (Polyäthylen)-Folie, die als Meterware preisgünstig erhältlich ist.

Geeignet ist auch ein - nicht zu steifes - Packpapier. Bei Verwendung eines saugfähigen Materials, z.B. eines Filzes, kann dieses auch mit einem Schmiermittel für den Fräser 14 getränkt sein. Eine derartige Gestaltung der Abdeckfolie 36 wird jedoch nur in speziellen Fällen einzusetzen sein.

Säulenförmige Stützen 31 mit der beschriebenen Gestaltung können natürlich auch in am Maschinentisch 17 vorgesehene Bohrungen einsteckbar sein, in welchem Falle ein Rahmen 21 benutzt werden kann, der nur Längs- und Querzargen 22, 23, 24 und 26 umfaßt.

In diesem Falle kann es zweckmäßig sein, wenn der Rahmen 21 an seiner Unterseite mit einem in eine nach unten offene Umfangsnut eingesetzten - nicht dargestellten - zusammendrückbaren Dichtring versehen ist.

## Ansprüche

1. Fräsmaschine für das Ausfräsen eines Werkstückes aus einer Rohmaterialplatte, welche durch die Wirkung der zwischen einer Unterdruckkammer und dem Außenraum mittels eines Gebläses, das saugseitig an die Kammer angeschlossen ist, erzeugten Druckdifferenz in seiner für die Fräsbearbeitung geeigneten Position gehalten ist, in der es an innerhalb der Kammer angeordneten Stützen abgestützt ist, dadurch gekennzeichnet, daß die vertikale Begrenzung der Unterdruckkammer (19) durch einen nach oben offenen, auf den Maschinentisch (17) der Fräsmaschine (10) aufgesetzten Rahmen (21) gebildet ist, innerhalb dessen lichter Querschnittsfläche das Werkstück (12) an den Stützen (29,31) abstützbar ist, daß der Rahmen (21) einschließlich des Werkstückes (12) mit einer flexiblen Materialbahn (36) abdeckbar ist, die mindestens den zwischen dem Rand der Rohmaterialplatte (11) und den Rahmenzargen (22,23,24 und 26) freibleibenden, spaltförmigen Querschnittsbereich (34) einschließlich der oberen Stirnflächen (33) der Rahmenzargen (22,23,24 und 26) abdeckt und durch die Druckdifferenz $\Delta$ p in dichtender Anlage mit dem Rahmen (21) und der Rohmaterialplatte (11) zugehalten bleibt, und daß als Fräswerkzeug (14) ein Fräser vorgesehen ist, bei dem die spiralförmig verlaufende Spannut (78) den zur Schnittrichtung gegensinnigen Windungssinn hat, derart, daß Frässpäne zum Fräserende hin gedrängt werden.

2. Fräsmaschine nach Anspruch 1, dadurch gekennzeichnet, daß die Stützen (29) als schmale, lattenförmige Stege ausgebildet sind, die, hochkant stehend, innerhalb des Rahmens (21) angeordnet sind und, zu den Längszargen (22,23) oder zu den Querzargen (24,26) des Rahmens (19) parallel verlaufend, durch Abstandshalter in definiertem Abstand voneinander äquidistant angeordnet sind und aus einem Material bestehen, das fräsbar ist.

3. Fräsmaschine nach Anspruch 1 oder Anspruch 2, dadurch gekennzeichnet, daß die Stützen (29,31) um einen Betrag (H - h) über die oberen Ränder (33) der Rahmenzargen (22,23,24 und 26) hinausragen, der um 2 bis 5 mm größer ist als die Länge des aus dem Werkstück (11,12) zur Unterdruckkammer (19) hin austretenden freien Endabschnittes des Fräswerkzeuges (14), wobei mit H die vom Boden der Unterdruckkammer aus gemessene Höhe der Stützen (29, 31) und mit h die entsprechend gemessene Höhe h der Rahmenzargen (22,23,24 und 26) bezeichnet sind.

4. Fräsmaschine nach einem der vorhergehenden Ansprüche, dadurch gekennzeichnet, daß die Abdeckfolie· (36) aus Papier oder einer Kunststoff-Folie besteht.

5. Fräsmaschine nach Anspruch 4, dadurch gekennzeichnet, daß die Abdeckfolie (36) eine mit einem Schmiermittel tränkbare Schicht hat.

6. Fräsmaschine nach einem der vorhergehenden Ansprüche, dadurch gekennzeichnet, daß die Rahmenzargen (22, 23,24 und 26) mit Öffnungen (79) versehen sind, die im Abstand über den Umfang des Rahmens (21) verteilt angeordnet sind.

7. Fräsmaschine nach einem der vorhergehenden Ansprüche, dadurch gekennzeichnet, daß das Fräswerkzeug (14) zwischen drehbaren Walzen (48,49) mit parallel zueinander verlaufenden, horizontalen Drehachsen (51,52) angeordnet ist, auf die zusätzliche Bahnen (44,46) einer flexiblen Abdeckfolie (47) aufgewickelt sind, deren Breite größer ist als die in Richtung der Walzenachsen (51, 52) gemessene größte Ausdehnung des Rahmens (19), und daß die Rohmaterialplatte (11) mindestens auf einem Bereich, der die Kontur (12) des auszufräsenden Werkstückes vollständig überdeckt, mittels der von den Walzen (48,49) abwickelbaren und auf diese wieder aufwickelbaren Trume der zusätzlichen Abdeckmaterialplanen (44,46) abgedeckt ist.

8. Fräsmaschine nach einem der vorhergehenden Ansprüche, dadurch gekennzeichnet, daß der Maschinentisch (17) und/oder eine den Rahmen (19) nach unten abschließende Bodenplatte (28) mit in einem regelmäßigen Rastermaß angeordneten, sacklochförmigen Vertiefungen (72) versehen ist, in welche säulenförmige Stützen (31) einsteckbar sind, die eine Vielzahl kleinflächiger Stützstellen bilden, auf denen die Rohmaterialplatte (11) abstützbar ist.

Fig. 1

EP 0 339 595 A2

P 88 32

P88 32

Fig. 2